(19) Europäisches Patentamt
European Patent Office
Office européen des brevets

(11) **EP 4 575 517 B1**

(12) **EUROPÄISCHE PATENTSCHRIFT**

(45) Veröffentlichungstag und Bekanntmachung des Hinweises auf die Patenterteilung:
**04.02.2026  Patentblatt 2026/06**

(21) Anmeldenummer: **23219715.2**

(22) Anmeldetag: **22.12.2023**

(51) Internationale Patentklassifikation (IPC):
**G01P 15/093** (2006.01)

(52) Gemeinsame Patentklassifikation (CPC):
**G01P 15/093**

(54) **QUANTENINERTIALMESSEINHEIT UND VERFAHREN ZUR ERFASSUNG WENIGSTENS EINER PHYSIKALISCHEN MESSGRÖSSE**

QUANTUM INERTIAL MEASUREMENT UNIT AND METHOD FOR DETECTING AT LEAST ONE PHYSICAL MEASUREMENT VARIABLE

UNITÉ DE MESURE INERTIELLE QUANTIQUE ET PROCÉDÉ DE DÉTECTION D'AU MOINS UNE GRANDEUR DE MESURE PHYSIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**25.06.2025  Patentblatt 2025/26**

(73) Patentinhaber: **Gottfried Wilhelm Leibniz Universität Hannover Körperschaft des Öffentlichen Rechts 30167 Hannover (DE)**

(72) Erfinder:
• **Stolzenberg, Knut Enno 30161 Hannover (DE)**
• **Bode, Sebastian 31303 Burgdorf (DE)**
• **Rasel, Ernst M. 30169 Hannover (DE)**
• **Gaaloul, Naceur 30167 Hannover (DE)**
• **Schlippert, Dennis 30451 Hannover (DE)**

(74) Vertreter: **Günther, Constantin Meissner Bolte Patentanwälte Rechtsanwälte Partnerschaft mbB Plathnerstraße 3A 30175 Hannover (DE)**

(56) Entgegenhaltungen:
• **GERSEMANN MATTHIAS ET AL: "Differential interferometry using a Bose-Einstein condensate", THE EUROPEAN PHYSICAL JOURNAL D, SPRINGER BERLIN HEIDELBERG, BERLIN/HEIDELBERG, vol. 74, no. 10, 1 October 2020 (2020-10-01), XP037260110, ISSN: 1434-6060, [retrieved on 20201001], DOI: 10.1140/EPJD/E2020-10417-8**
• **MARKUS GREINER: "Ultracold quantum gases in three-dimensional optical lattice potential", 22 January 2003 (2003-01-22), XP093165251, Retrieved from the Internet <URL:https://www.mpq.mpg.de/6059777/MPQ-283.pdf> [retrieved on 20240522]**

**Beschreibung**

Die Erfindung betrifft eine Quanteninertialmesseinheit zur Erfassung wenigstens einer physikalischen Messgröße basierend auf atominterferometrischer Beschleunigungsmessung. Die Erfindung betrifft außerdem ein Verfahren zur Erfassung wenigstens einer physikalischen Messgröße basierend auf atominterferometrischer Beschleunigungsmessung mittels einer derartigen Quanteninertialmesseinheit.

Eindimensionale atominterferometrische Beschleunigungsmessungen mit kalten Atomen sind im Stand der Technik bereits umfangreich bekannt. Es gibt auch bereits Vorschläge, solche atominterferometrischen Messungen auf mehrere Raumrichtungen und zusätzliche Messgrößen, insbesondere Winkelgeschwindigkeit, Winkelbeschleunigung usw. zu erweitern. Diese Vorschläge [1, 2, 3, 4, 5, 6, 7] sind jedoch mit erheblich erhöhtem apparativem Aufwand gegenüber der eindimensionalen Beschleunigungsmessung verbunden. Zum Teil werden komplexe Ansätze zur Simultanmessung mehrerer Größen und Achsen [6, 7] vorgeschlagen.

GERSEMANN ET AL:"Differential interferometry using a Bose-Einstein condensate",THE EUROPEAN PHYSICAL JOURNAL D, SPRINGER BERLIN HEIDELBERG, BERLIN/HEIDELBERG, Bd. 74, Nr. 10, 1. Oktober 2020 (2020-10-01), ISSN: 1434-6060, DOI: 10.1140/EPJD/E2020-10417-8 beschreibt ein Mach-Zehnder Atominterferometer, in dem ein Bose-Einstein Kondensat (BEC) zunächst in einer Atomfalle gefangen, und anschließend in zwei Materiewellenpakete aufgespalten wird, die auseinander driften. Mittels eines dualen Interferometers werden die Phasen der beiden Wellenpakete gemessen, und daraus die Beschleunigung und Winkelgeschwindigkeit des BEC abgeleitet.

Der Erfindung liegt die Aufgabe zugrunde, die Erfassung wenigstens einer physikalischen Messgröße basierend auf atominterferometrischer Beschleunigungsmessung mit verringertem Aufwand zu ermöglichen.

Diese Aufgabe wird gelöst durch eine Quanteninertialmesseinheit zur Erfassung wenigstens einer physikalischen Messgröße basierend auf atominterferometrischer Beschleunigungsmessung, aufweisend:

> a) wenigstens eine Atomfalle, die dazu eingerichtet ist, eine Atomwolke zu fangen,
>
> b) wenigstens eine steuerbare Aufteilungsvorrichtung, die dazu eingerichtet ist, abhängig von wenigstens einem Steuersignal in der in der Atomfalle gefangenen Atomwolke mehrere räumlich voneinander separierte makroskopische Teilatomwolken mittels kalter oder ultrakalter Quantengase, wie beispielsweise Bose-Einstein-Kondensate, in einer definierten geometrischen Anordnung zu erzeugen,
>
> c) wenigstens eine Atomoptiklichtfeldvorrichtung, die dazu eingerichtet ist, mittels der erzeugten makroskopischen Teilatomwolken jeweils eine atominterferometrische eindimensionale Beschleunigungsmessung auszuführen, wobei für jede makroskopische Teilatomwolke ein Beschleunigungswert bestimmt wird,
>
> d) wenigstens eine Auswertevorrichtung, die dazu eingerichtet ist, aus den mittels der wenigstens einen Atomoptiklichtfeldvorrichtung gewonnenen mehreren eindimensionalen Beschleunigungswerten eine andere physikalische Messgröße zu bestimmen als die gemessenen eindimensionalen Beschleunigungswerte.

Die Erfindung hat den Vorteil, dass mit Komponenten der Vorrichtung, die für eine eindimensionale Beschleunigungsmessung ohnehin erforderlich sind, bei nur geringer Erhöhung des apparativen Aufwands mehrere einzelne Atominterferometer in derselben Atomfalle gebildet werden können, nämlich durch die räumlich voneinander separierten makroskopischen Teilatomwolken, die jeweils einzeln für eine atominterferometrische eindimensionale Beschleunigungsmessung genutzt werden können. Auf diese Weise können mehrere eindimensionale Beschleunigungswerte mit geringem apparativem Aufwand gewonnen werden, aus denen dann die gewünschte andere physikalische Messgröße bestimmt werden kann. Die makroskopischen Teilatomwolken können z.B. makroskopische Quantenobjekte oder sonstige makroskopisch separierte Atomwolken sein, wie z.B. thermische Atomwolken bei einigen Mikrokelvin oder mehr, bei den sich kein Quantencharakter direkt äußert.

Die Atomoptiklichtfeldvorrichtung kann z.B. einem Laserinterferometer ähneln, wobei die Atomoptiklichtfeldvorrichtung z.B. ein Ein- oder Mehr-Photonenlichtfeld aufweisen kann, das die Atomoptik beinhaltet, z.B. in Form einer Strahlteilung mit Impulsübertrag.

Gemäß einer vorteilhaften Ausgestaltung der Erfindung ist vorgesehen, dass die steuerbare Aufteilungsvorrichtung dazu eingerichtet ist, die makroskopischen Teilatomwolken in einer definierten geometrischen Anordnung in Form einer regelmäßigen oder unregelmäßigen zwei- oder dreidimensionalen Matrixanordnung zu erzeugen. Durch eine solche definierte geometrische Anordnung können die Bestimmungsgleichungen für die Bestimmung der anderen physikalischen Messgröße aus den mehreren eindimensionalen Beschleunigungswerten der mehreren Atominterferometer bzw. der makroskopischen Teilatomwolken einfach gehalten werden, sodass der damit einhergehende Rechenaufwand minimiert wird und insbesondere durch kontrolliertes Durchstimmen der Abstände eine Charakterisierung/Kalibrierung leichter möglich ist.

Gemäß einer vorteilhaften Ausgestaltung der Erfindung ist vorgesehen, dass die Matrixanordnung wenigstens zwei, wenigstens vier, wenigstens sechs oder wenigstens neun Matrixelemente in Form der makroskopischen Teilatomwolken hat. Auf diese Weise lassen sich mit einem im Wesentlichen gleichbleibenden Aufbau der Vorrichtung eine Vielzahl einzelner eindimensionaler Beschleunigungswerte bestimmen, was wiederum die Bestimmung mehrerer unterschiedlicher anderer physikalischer Messgrößen aus diesen Beschleunigungswerten ermöglicht. Beispielsweise kann die Matrixanordnung mindestens als 1x2-Matrix oder 2x1-Matrix ausgebildet sein. Wie nachfolgend gezeigt wird, ist z.B. eine Ausbildung als 3x3-Matrix vorteilhaft.

Gemäß einer vorteilhaften Ausgestaltung der Erfindung ist vorgesehen, dass die definierte geometrische Anordnung der makroskopischen Teilatomwolken in einer Ebene eine Fläche von wenigstens 0,5 mm$^2$ oder wenigstens 1 mm$^2$ umfasst. Auf diese Weise kann eine ausreichende räumliche Trennung der einzelnen makroskopischen Teilatomwolken und dementsprechend die Durchführung separater interferometrischer Messungen an den Teilatomwolken sichergestellt werden. Die makroskopischen Teilatomwolken können dabei in einer Ebene angeordnet sein. Die makroskopischen Teilatomwolken können über einen dreidimensionalen Raumbereich verteilt angeordnet sein, z.B. in Form einer dreidimensionalen Matrixanordnung. Die makroskopischen Teilatomwolken können auch in einer eindimesionalen Anordnung verteilt angeordnet sein.

Allgemein gesagt kann der Abstand zwischen den Mittelpunkten benachbarter makroskopischer Teilatomwolken wenigstens 0,3 mm, wenigstens 0,7 mm oder wenigstens 1 mm betragen. Bei einer dreidimensionalen Matrixanordnung kann die definierte geometrische Anordnung der makroskopischen Teilatomwolken ein Volumen von wenigstens 0,125 mm$^3$ oder wenigstens 1 mm$^3$ umfassen.

Gemäß einer vorteilhaften Ausgestaltung der Erfindung ist vorgesehen, dass die Auswerteeinrichtung dazu eingerichtet ist, als physikalische Messgröße eine oder mehrere Drehraten, eine oder mehrere Drehbeschleunigungen, einen oder mehrere Beschleunigungsgradienten, einen oder mehrere Magnetfeldkomponenten und/oder wenigstens eine sonstige inertiale Messgröße zu bestimmen. Dementsprechend kann die erfindungsgemäße Quanteninertialmesseinheit sehr universell eingesetzt werden und erlaubt hochgenaue Bestimmungen weiterer physikalischer Messgrößen aus den eindimensionalen Beschleunigungsmessungen.

Die Erfindung eignet sich sowohl für frei bewegliche Atomwolken als auch für optisch geführte Atomwolken, z.B. für die Interferometrie in einem Wellenleiter. Die wenigstens eine Atomfalle kann z.B. dazu eingerichtet sein, die Atomwolke in einem Vakuumsystem, z.B. einer Vakuumkammer oder einer Glaszelle, zu fangen.

Gemäß einer vorteilhaften Ausgestaltung der Erfindung ist vorgesehen, dass die Quanteninertialmesseinheit wenigstens einen Wellenleiter aufweist, wobei die Atomfalle dazu eingerichtet ist, in dem Wellenleiter die Atomwolke zu fangen. Auf diese Weise kann der Aufbau der Vorrichtung weiter vereinfacht werden und die Messgenauigkeit erhöht werden. Die makroskopischen Teilatomwolken können dann in dem Wellenleiter erzeugt werden.

Gemäß einer vorteilhaften Ausgestaltung der Erfindung ist vorgesehen, dass die Atomoptiklichtfeldvorrichtung dazu eingerichtet ist, interferometrische Messungen an den makroskopischen Teilatomwolken mittels kohärenter Ein- oder Mehrphotonenprozesse auszuführen. Dies erlaubt die Funktionalisierung mehrerer makroskopischer Teilatomwolken in der Quanteninertialmesseinheit als separate Interferometer mit geringem Aufwand und hoher Messgenauigkeit. Die Atomoptiklichtfeldvorrichtung kann z.B. dazu eingerichtet sein, interferometrische Messungen an den makroskopischen Teilatomwolken mittels wenigstens eines Beugungsprozesses auszuführen, wie z.B. Bragg-, Doppel-Bragg-, Raman-, Doppel-Raman, Einzelphotonen-Beugung.

Gemäß einer vorteilhaften Ausgestaltung der Erfindung ist vorgesehen, dass die Atomfalle als magnetooptische Atomfalle ausgebildet ist. Dies erlaubt ein zuverlässiges Bereitstellen der Atomwolke mit geringem apparativem Aufwand.

Gemäß einer vorteilhaften Ausgestaltung der Erfindung ist vorgesehen, dass die Quanteninertialmesseinheit eine Kühlvorrichtung zum Abkühlen der Atomwolke hat, die eine evaporative Kühlanordnung aufweist. Auf diese Weise können die durch Laserbestrahlung gekühlten Atome der Atomwolke weiter in den Bereich kalter oder ultrakalter Quantengase abgekühlt werden. Die evaporative Kühlanordnung ist zum Durchführen einer evaporativen Kühlung der Atomwolke eingerichtet. Bei der evaporativen Kühlung werden aus der Atomwolke jeweils die energiereichsten Atome entfernt, z.B. durch Radiofrequenz-Übergänge zwischen den verschiedenen Zeeman-Zuständen in einer Magnetfalle.

Gemäß einer vorteilhaften Ausgestaltung der Erfindung ist vorgesehen, dass die steuerbare Aufteilungsvorrichtung wenigstens eine optische Dipolfalle und/oder wenigstens eine Magnetfalle aufweist. Die steuerbare Aufteilungsvorrichtung hat die Funktion, die Atomwolke in die voneinander separierten makroskopischen Teilatomwolken zu unterteilen. Dies gelingt durch eine optische Dipolfalle und/oder wenigstens eine Magnetfalle bei geringem apparativem Aufwand besonders effizient.

Gemäß einer vorteilhaften Ausgestaltung der Erfindung ist vorgesehen, dass die wenigstens eine optische Dipolfalle wenigstens zwei Strahlengänge hat, insbesondere wenigstens zwei sich kreuzende Strahlengänge oder wenigstens zwei parallele Strahlengänge. Auf diese Weise können im Bereich der sich kreuzenden Strahlen jeweilige atominterferometrische Messungen an einem sich im Bereich des Kreuzungspunkts der Strahlen befindlichen makroskopischen Teilatomwolke durchgeführt werden. Im Falle paralleler Strahlen können die Messungen eindimensional an zwei makroskopischen Teilatomwolken im Strahlengang durchgeführt werden.

Gemäß einer vorteilhaften Ausgestaltung der Erfindung ist vorgesehen, dass die steuerbare Aufteilungsvorrichtung wenigstens eine steuerbare optische Aufteilungseinheit, insbesondere einen Deflektor, aufweist, durch die wenigstens ein Strahlengang der optischen Dipolfalle in mehrere Teilstrahlengänge aufteilbar sind. Dies ermöglicht es, bei nur geringer Erhöhung des apparativen Aufwand gegenüber einem zur eindimensionalen Beschleunigungsmessung eingerichteten Atominterferometer gleich mehrere voneinander getrennte atominterferometrische Messungen an den voneinander separierten makroskopischen Teilatomwolken durchzuführen. Der steuerbare optische Deflektor kann z.B. ein akusto-optischer Deflektor sein, der zur Erzeugung unterschiedlicher Lichtstrahlablenkungen in Abhängigkeit von eingespeisten Wechselsignalen mit variierender Frequenz eingerichtet ist.

Die eingangs genannte Aufgabe wird außerdem gelöst durch ein Verfahren zur Erfassung wenigstens einer physikalischen Messgröße basierend auf atominterferometrischer Beschleunigungsmessung mittels einer Quanteninertialmesseinheit, insbesondere einer Quanteninertialmesseinheit der zuvor erläuterten Art, mit folgenden Merkmalen:

a) mittels einer Atomfalle wird eine Atomwolke gefangen,

b) mittels einer steuerbaren Aufteilungsvorrichtung werden abhängig von wenigstens einem Steuersignal in der in der Atomfalle gefangenen Atomwolke mehrere räumlich voneinander separierte makroskopische Teilatomwolken mittels kalter oder ultrakalter Quantengase, wie beispielsweise Bose-Einstein-Kondensate, in einer definierten geometrischen Anordnung erzeugt,

c) mittels einer Atomoptiklichtfeldvorrichtung wird mittels der erzeugten makroskopischen Teilatomwolken jeweils eine atominterferometrische eindimensionale Beschleunigungsmessung ausgeführt, wobei für jede makroskopische Teilatomwolke ein Beschleunigungswert bestimmt wird,

d) mittels wenigstens einer Auswertevorrichtung wird aus den mittels der wenigstens einen Atomoptiklichtfeldvorrichtung gewonnenen mehreren eindimensionalen Beschleunigungswerten eine andere physikalische Messgröße bestimmt als die gemessenen eindimensionalen Beschleunigungswerte.

Auch hierdurch können die zuvor erläuterten Vorteile realisiert werden.

Die hier beschriebene Erfindung eignet sich für das Gebiet der Inertialsensorik und Navigation. Insbesondere wird eine Methode beschrieben, mit der eine konventionelle atominterferometrische 1D-Beschleunigungsmessung mit kalten Atomen unter Einsatz dynamischer optischer Potentiale auf mehrere Raumrichtungen und zusätzliche Messgrößen, insbesondere Winkelgeschwindigkeit, Winkelbeschleunigung, räumliche Gradienten, Krümmung und höhere Ordnungen erweitert werden kann.

Mit der Erfindung wird die eingangs erläuterte Problematik gelöst und liefert somit einen einfachen Weg - ohne maßgebliche Beeinflussung von Komplexität und Größe des Systems - vorhandene Systeme mit geringem Aufwand in ihrer Funktion erheblich zu erweitern. Eine solche Erweiterung hat natürlich dort einen besonders hohen Stellenwert, wo SWaP-Budget (*Size*, *Weight*, *and Power*) teuer und wichtig ist, also auf transportablen Plattformen, beispielsweise auf Satellitenmissionen zur Erdbeobachtung oder in der Inertialnavigation mittels Hybridsensorik. Insofern ergeben sich wichtige Anwendungen der Erfindung im Feld der Inertialnavigation und -sensorik, in denen ein solcher Aufbau auf mobilen Plattformen zur Auswertung lokaler Gravitation, Beschleunigungen und ihrer räumlichen Ableitungen und Rotationen eingesetzt wird. Die große Anzahl einzelner, korrelierbarer Messungen liefert in der Erfindung durch die Möglichkeit der differentialen Rauschunterdrückung (z.B. Vibrationsrauschen) und Möglichkeiten der Systemcharakterisierung (z.B. Wellenfrontanalyse des Strahlteilerlichtfelds mittels bewegter, skalierbarer Atomanordnungen und Modellierung) einen disruptiven Vorteil gegenüber dem Stand der Technik. Die zusätzlichen inertialen Messgrößen können damit über das Einsatzszenario selbst hinaus für die Charakterisierung und Kontrolle systematischer Effekte eine zentrale Rolle spielen.

Die Empfindlichkeit auf Rotationen basiert auf der Kombination zweier durch eine Basislinie separierter Beschleunigungs- oder Geschwindigkeitsmessungen, wie sie z.B. für inertial stabilisierte Plattformen [9] üblich ist oder wie in Ref. [10] für die Kombination von Atominterferometern vorgeschlagen ist. Die Erfindung profitiert von der kontinuierlichen Skalierbarkeit (Abstände $d_x$ und $d_y$ können frei von 0 mm auf mehrere Millimeter variiert werden), die der Anpassung der Messempfindlichkeit auf Umgebungsrauschen bzw. Zielobservable ebenso wie der Charakterisierung bzw. Kalibrierung der Messung dienen kann. Durchaus denkbar sind weitere sensitive Achsen durch die Verwendung von 3D-Anordnungen der Interferometer.

Die Erfindung wird nachfolgend anhand von Ausführungsbeispielen unter Verwendung von Zeichnungen näher erläutert.

Es zeigen

Figur 1    eine Quanteninertialmesseinheit in schematischer Darstellung,
Figur 2    die in der Quanteninertialmesseinheit erzeugbare Anordnung mehrerer makroskopischer Teilatomwolken,
Figur 3    Transporttrajektorien der makroskopischen Teilatomwolken,
Figur 4    Transporteffizienz der Teilatomwolken für unterschiedliche Rampendauern,
Figur 5    eine Strahlteilereffizienz in Abhängigkeit von der Pulsdauer und Freifallzeit,
Figur 6    die Strahlteilereffizienz in Abhängigkeit von der Y-Position und Vorfallzeit,

Figur 7   Ausgangssignale der neun simultanen Atominterferometer,

Figur 8   Ausgangssignale der neun simultanen Atominterferometer in parametrischer Darstellung,

Figur 9   Ausgangssignale der neun simultanen Atominterferometer im 1D-Wellenleiter.

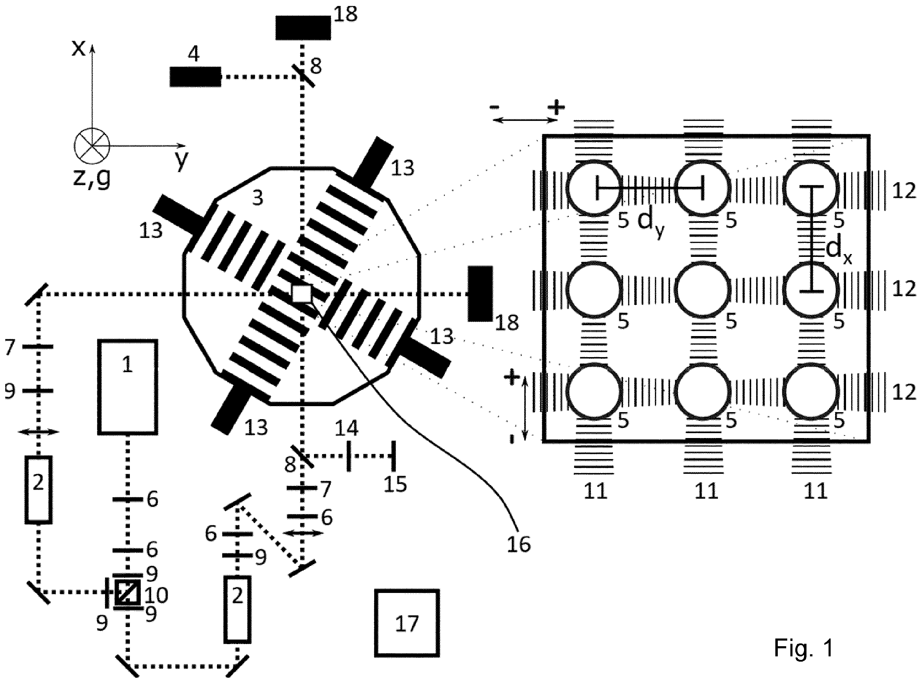

Die Figur 1 zeigt stark schematisiert eine Quanteninertialmesseinheit zur Messung einer physikalischen Messgröße basierend auf atominterferometrischer Beschleunigungsmessung. Die Quanteninertialmesseinheit weist eine Atomfalle 1, 3, 13, 16 auf. Zur Atomfalle gehören außerdem optische Dipolfallen 11, 12, Linsensysteme 6, 7, sowie Verzögerungsplättchen 9 und Strahlteiler 10. Als steuerbare Aufteilungsvorrichtung können z.B. 2D-akusto-optische Deflektoren (AOD) 2 eingesetzt werden. Als Atomoptiklichtfeldvorrichtung sind BEC-Kollimatoren 4 und dichroitische Spiegel 8 zur Separation von Atomoptiklichtfeld und Dipolfallenstrahlen vorhanden. Zur Auswertung der Daten ist eine Auswertevorrichtung 17 vorhanden, z.B. ein Rechner.

Die Quanteninertialmesseinheit kann z.B. folgende Einzelkomponenten aufweisen:

1 Einen ersten Laser, z.B. einen Laser zur Erzeugung zeitlich gemittelter optischer Potentiale (z.B. 55 W 1064 nm Laser), der zum Fangen der in der Magnetfalle vorgekühlten Atomwolke genutzt wird. Anschließendes evaporatives Kühlen der Atomensembles führt zur Erzeugung der quantenentarteten Gase.

2 2D-Akusto-optischer Deflektoren (AOD): Das Licht vom ersten Laser wird mit den Akusto-optischen Deflektoren gebrochen und durch ein geeignetes angelegtes RF-Signal wird die erste Beugungsordnung in mehrere Teilstrahlen aufgeteilt. Diese Teilstrahlen sind frei einstellbar in Position (im Bereich einiger Millimeter) und Amplitude. Durch Benutzung zweier 2D-AODs kann in der Experimentierkammer 3 ein 2D-Gitter aus Potentialminima erzeugt werden.

3 Experimentierkammer mit Ultra-hoch Vakuum (UHV).

4 Bragg-Kollimator: Durch eine Faser werden die beiden für die Atominterferometrie genutzten Teilstrahlen zum Bragg-Kollimator geleitet. Dieser sendet die Interferometriestrahlen kollimiert mit einem Durchmesser von z.B. 6.5 mm durch die Experimentierkammer 3, wird an Reflektoren 15 retroreflektiert und die Polarisationen der Teilstrahlen werden durch $\lambda/4$ Verzögerungsplatte 14 um 90° gedreht. Hierdurch werden die Atomensembles für interferometrische Messungen nutzbar gemacht.

5 Makroskopische Teilatomwolken, z.B. Bose-Einstein Kondensate (BEC) im Array. Durch die gitterartig angeordneten Potentialminima ist es möglich in jedem ein einzelnes BEC zu erzeugen. Die BECs sind durch die Abstände $d_x$ und $d_y$ voneinander getrennt. Die Abstände können beliebig gewählt und verändert werden.

6 Strahlteleskope zur Aufweitung des Strahls des ersten Lasers 1.

7 Fokussierungslinsen: Diese Linsen fokussieren den Dipolfallenstrahl im Zentrum der Experimentierkammer 3.

8 Dichroitischer Spiegel, der transparent für den Dipolfallenstrahl (1064 nm) und reflektiv für die Interferometriestrahlen (780 nm) ist.

9 $\lambda/2$ Verzögerungsplättchen um die Polarisation des Dipolfallenstrahls einzustellen. Die Brechungseffizienz der AODs ist stark von der Polarisation des Lichts abhängig. Im Zentrum der Experimentierkammer 3 müssen beide Dipolfallenstrahlen orthogonal polarisiert sein, um Interferenzeffekte zu vermeiden.

10 Polarisationsabhängiger Strahlteiler (PBS) um den Dipolfallenstrahl in zwei Strahlen aufzuteilen, die im Experimentierkammerzentrum eine gekreuzte Dipolfalle realisieren.

11 ODT modes BP1: Optische Moden des Dipolfallenstrahls in x-Richtung. Die Moden werden durch den 2D-AOD (2) erzeugt.

12 ODT modes BP2: Optische Moden des Dipolfallenstrahls in y-Richtung. Die Moden werden durch den 2D-AOD (2) erzeugt.

13 MOT Kollimatoren, die Laserlicht für die ersten Kühlstufen vor dem Beladen der optischen Dipolfalle bereitstellen. Außerdem gibt es noch ein Kollimatorenpaar in z-Richtung über und unter dem Experimentierkammerzentrum, sowie ein Hemholtzspulenpaar ober- und unterhalb der Experimentierkammer (nicht eingezeichnet) um die benötigten Magnetfelder bereitzustellen.

14 Polarisationsfilter ($\lambda/4$ Verzögerungsplatte)

15 Reflektor

18 Die Dipolfallenstrahlen werden hinter der Experimentierkammer aus Sicherheitsgründen mit Strahlfallen geblockt

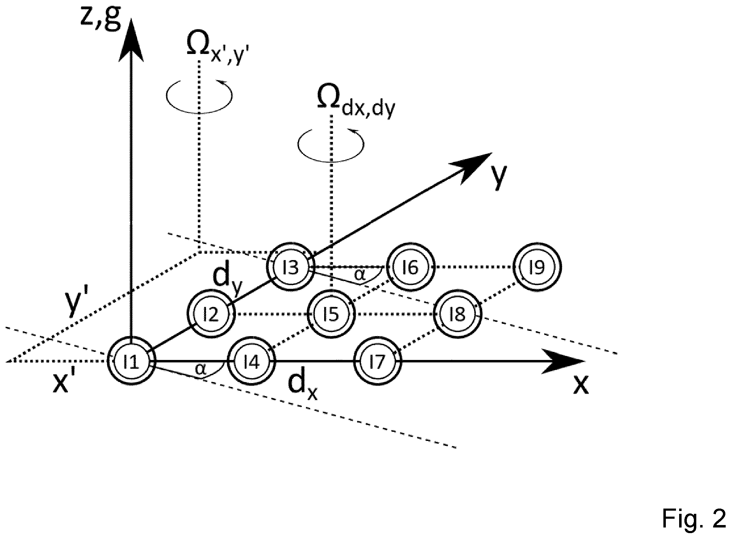

In einem Bereich 16 werden dann in einer Matrixanordnung mehrere voneinander separierte makroskopische Teilatomwolken 5 erzeugt, hier dargestellt in einer 3x3-Matrix, d.h. neun makroskopische Teilatomwolken 5, mit denen die in Figur 2 dargestellten voneinander unabhängigen neun Interferometer I1, I2, I3, I4, I5, I6, I7, I8, I9 gebildet werden können. Hierfür wird das Licht des ersten Lasers 1 in dem polarisationsabhängigen Strahlteiler 10 in zwei Strahlengänge aufgeteilt, die über Kreuz durch die Experimentierkammer 3 geleitet werden. In jedem Strahlengang erfolgt eine Aufteilung des jeweiligen Strahls über die steuerbare Aufteilungsvorrichtung in z.B. je nebeneinanderliegende 3 Teilstrahlen.

Als Ausführungsbeispiel wird eine 2D-Anordnung von Bose-Einstein Kondensaten (BEC) 5 beschrieben, die in einer Schnittebene der beiden optischen Dipolfallenstrahlen 11, 12 liegt. Durch die große räumliche Auslenkung (~' einige Millimeter) der Foki der beiden Dipolstrahlen 11, 12 ist es möglich, mehrere Potentialmulden in zwei Dimensionen gleichzeitig zu erzeugen und mit zuvor in einer Magnetfalle gefangenen und gekühlten $^{87}$Rb-Atomen zu beladen. In diesen Potentialmulden lässt sich durch evaporatives Kühlen jeweils ein BEC 5 erzeugen. Die Anzahl ultrakalter Atome in der Anordnung beträgt etwa $\sim 3 \times 10^5$. Beschrieben werden im Folgenden:

- *Optischer Transport der Anordnung*
  Die Abstände zwischen den BECs $d_{x/y}$ können skaliert werden, um die differentielle Phasensensitivität der anschließenden interferometrischen Messungen anzupassen. Die von der Anordnung maximal eingeschlossene Fläche ist makroskopisch und kann nach dem Transport mit 1.5 mm$^2$ beziffert werden.

- *Lichtpulsatominterferometrie*
  Die Strahlteiler- sowie Spiegelpulse der Interferometriesequenz werden demonstriert. Anschließen werden Ergebnisse von interferometrischen Messungen präsentiert.

- *Phasensensitivität und Diskussion*
  Die differentielle Phasensensitivität der Anordnung wird angegeben und weitere *proof-of-principle* Experimente vorgeschlagen.

Optischer Transport der Anordnung

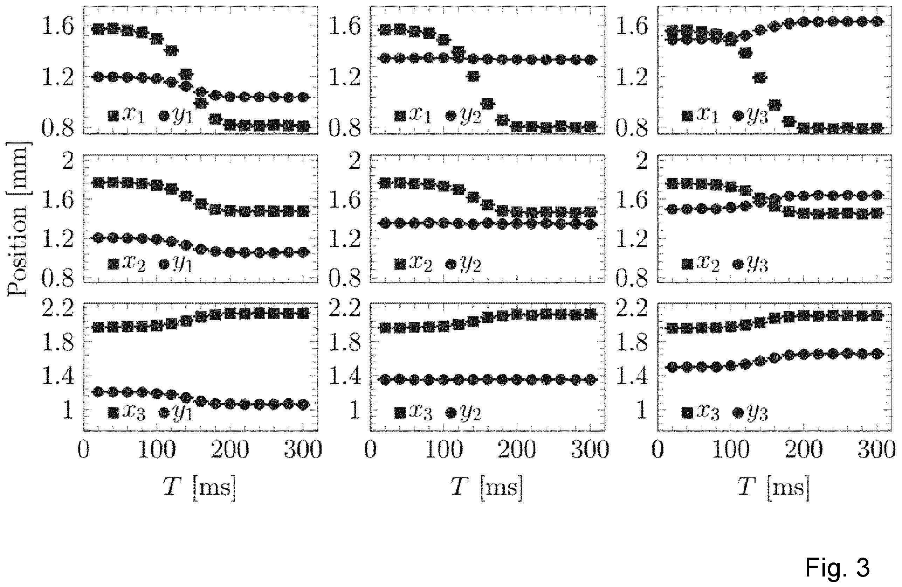

Durch geeignete Frequenzrampen der an die akusto-optischen Deflektoren (AOD) 2 angelegten Radiofrequenzsignale kann der Abstand zwischen den BECs 5 von anfänglich 300 $\mu$m ($d_x$) bzw. 150 $\mu$m ($d_y$) auf maximal 750 $\mu$m ($d_x$) bzw. 500 $\mu$m ($d_y$) erhöht werden (vgl. Figur 3). Die Transporttrajektorien können sigmoide Frequenzrampen sein, wobei die Transporteffizienz für Rampendauern von 600 ms maximal ist. Es konnten Spitzentransporteffizienzen von $\sim$ 95% gemessen werden. Für längere Rampendauern lassen sich charakteristische, exponentielle Lebenszeitverluste feststellen.

Die Figur 3 zeigt dabei Transporttrajektorien der einzelnen BECs der Anordnung. Hier dargestellt sind die gemessenen Trajektorien der BECs der Anordnung. Die einzelnen Bilder beschreiben jeweils die x- und y-Position eines einzelnen BECs in Abhängigkeit von der Transportzeit in ms. Die Nummerierung ist reihenweise von links nach rechts von 1 - 9. Zu sehen sind beispielhaft die Trajektorien, die in einem Abstand zwischen den BECs von $d_{x/y}$ = 600/ 300 $\mu$m resultieren.

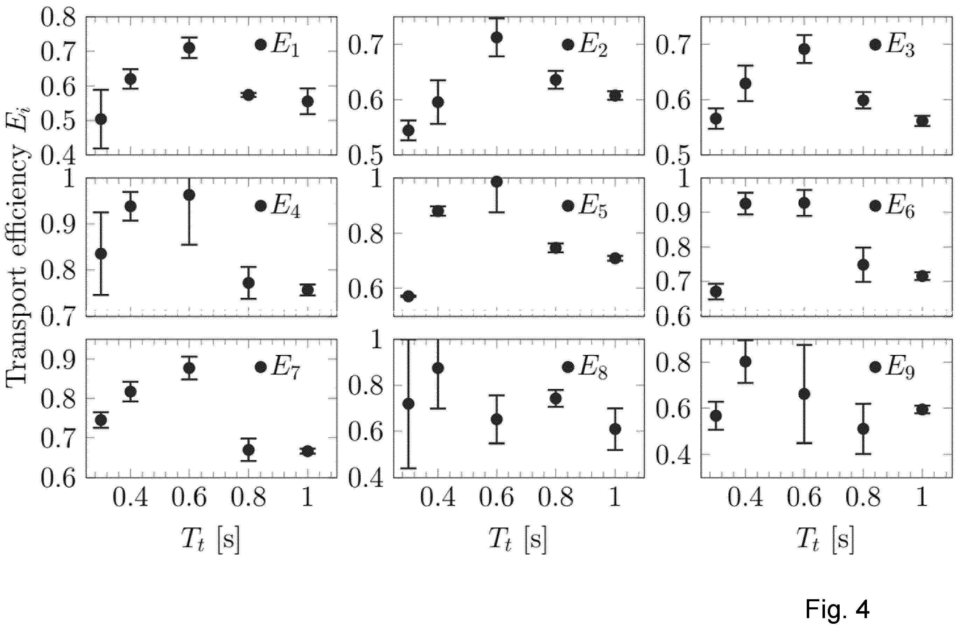

Die Figur 4 zeigt Transporteffizienzen für unterschiedliche Rampendauern 300, 400, 600, 800, 1000 ms. Die Effizienz wurde bestimmt, indem die Atomzahlen vor der Rampe und nach der Rampe vermessen wurden und die Mittelwerte für das Verhältnis $T_{eff} = N_{nach}/N_{vor}$ sind im Plot aufgetragen.

Lichtpulsatominterferometrie

Für die Umsetzung der interferometrischen Messungen an der BEC Anordnung wird sich der bekannten Technik der Doppel-Bragg Beugung bedient. Dabei werden die BECs der Anordnung in die Impulszustände $|\pm 2hk\rangle$ übertragen (Strahlteiler) und nach einer Evolutionszeit $T$ invertiert (Spiegel). Nach einer zweiten Evolutionszeit $T$ wird erneut ein Strahlteilerpuls eingestrahlt, der das Interferometer schließt. Das Verhältnis der gemessenen Populationen der Impulszustände $|2hk\rangle$ und $|0\rangle$ erlaubt Rückschlüsse auf die Phase $\Phi$ des Interferometers. Die Strahlteiler- bzw. Spiegelpulse werden durch zwei orthogonal polarisierte, retroreflektierte Lichtfelder realisiert. Das hierfür genutzte Lasersystem ist in Figur 1 dargestellt. Die Laserstrahlen haben nach Faserausgang und Teleskop ein Gauss-förmiges Profil und einen Durchmesser von etwa 0.65 cm. Die Leistung in den Strahlen beträgt etwa 12 mW. Bevor die Doppel-Bragg-Pulse eingestrahlt werden, wird die Dipolfalle abgeschaltet, und die atomaren Ensembles befinden sich im freien Fall. Da die Interferometriestrahlen nahezu etwa horizontal ausgerichtet sind, ist die Zeit zwischen Abschaltung der Dipolfalle und letztem Strahlteilerpuls auf maximal 20 ms zu begrenzen, um einen hinreichenden räumlichen Überlapp zwischen Bragg-Strahlen und Falltrajektorie der Atome zu gewährleisten. Rabi-Oszillationen für drei Vorfallzeiten $t_1$ = 5 ms, $t_2$ = 9 ms und $t_3$ = 15 ms vor der Applikation der Bragg-Laserpulse sind in 3 dargestellt. Das Intensitätsprofil der Bragg-Pulse ist etwa Gauss-förmig, was eine Verlangsamung der Rabi-Oszillation für längere Vorfallzeiten zur Folge hat, da die Atome aus dem Zentrum der Interferometriestrahlen fallen und die Rabifrequenz mit der Wurzel der Intensität abfällt. Die maximale Effizienz der Strahlteiler kann mit $\sim$ 95% für $t_1$ und $\sim$ 85% für $t_3$ beziffert werden. Durch Verschiebung der Anordnung orthogonal zu den Interferometriestrahlen (entlang der y-Achse), kann deren Intensitätsprofil vermessen werden. Dafür wurden Messungen für zwei unterschiedliche *y*-Positionen der Anordnung durchgeführt. Bei der ersten Messung können die Positionen der Spalten, referenziert auf den Kamerachip der Absorptionsabbildung, mit 830, 1230, 1630 microm und in der zweiten mit 680, 1080, 1480 microm beziffert werden. Der Spiegelpuls hat eine maximale Effizienz von $\sim$ 85% bei etwa gleicher Pulsdauer wie in 4 und Vorfallzeit von 5 ms. Erreicht wird dies durch eine Verdopplung der Radiofrequenz-Leistung am Schalt-AOM (letzter AOM im Bragg-Lasersystem).

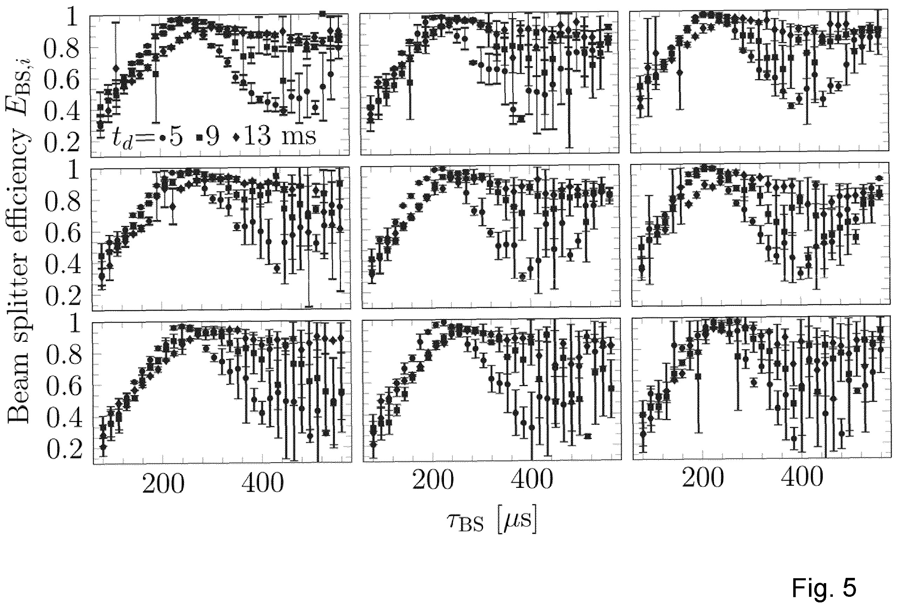

Die Figur 5 zeigt die Strahlteilereffizienz in Abhangigkeit der Pulsdauer und Freifallzeit (Legende). Zu sehen sind Rabi-Oszillationen, die durch sequenzielles Erhöhen der Pulsdauer $\tau$ von 112 - 472 $\mu$s abgerastert werden. Die Zeiten t1 = 5 ms, t2 = 9ms, t3 = 15 ms stehen für die Dauer des freien Falls der Atome vor der Applikation der Bragg-Laserpulse.

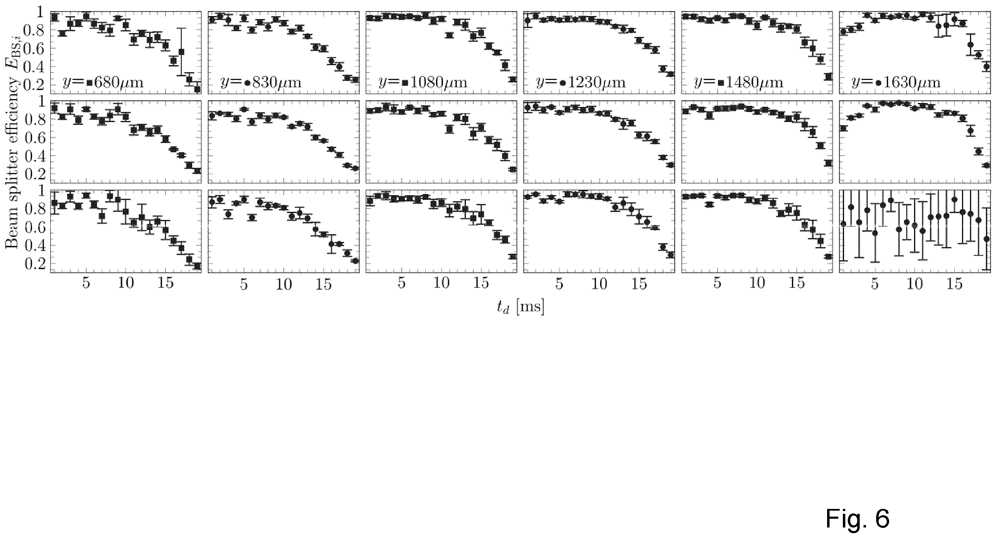

Die Figur 6 zeigt die Strahlteilereffizienz in Abhangigkeit von der y-Position und Vorfallzeit. Dargestellt sind die Strahlteilereffizienzen für eine Pulsdauer $\tau$ von 276 $\mu$s und variierende Vorfallzeiten. Die y-Positionen der Spalten der Anordnung sind in der oberen Reihe angegeben. Die Effizienz steigt von kleineren zu größeren y-Positionen, was bedeutet, dass das Zentrum der Interferometriestrahlen in y-Richtung verschoben ist

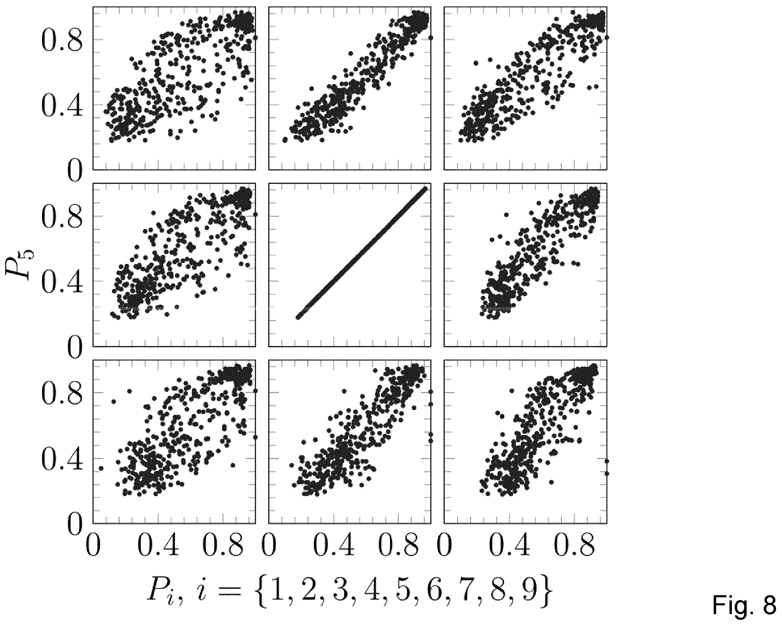

Zunächst skaliert die Ausgangsphase des Interferometers mit dem Skalenfaktor $\Phi = k_{eff}a\text{-}_{eff}T^2$ mit dem effektiven Wellenvektor der Doppel-Bragg-Beugung $k_{eff}$ und der effektiven Beschleunigung $a_{eff}$, die durch die Verkippung der Interferometriestrahlen induziert wird (Winkel $\alpha$ in Figur 3). Die Beschleunigung ist gegeben durch $a_{eff} = g \cdot \sin(\alpha)$, wobei g = 9.81 m/s$^2$ die Erdbeschleunigung ist. Die Ausgangssignale aller 9 gleichzeitigen Interferometer mit $d_{x/y}$ = 600/300 $\mu$m sind in Figur 8 dargestellt.

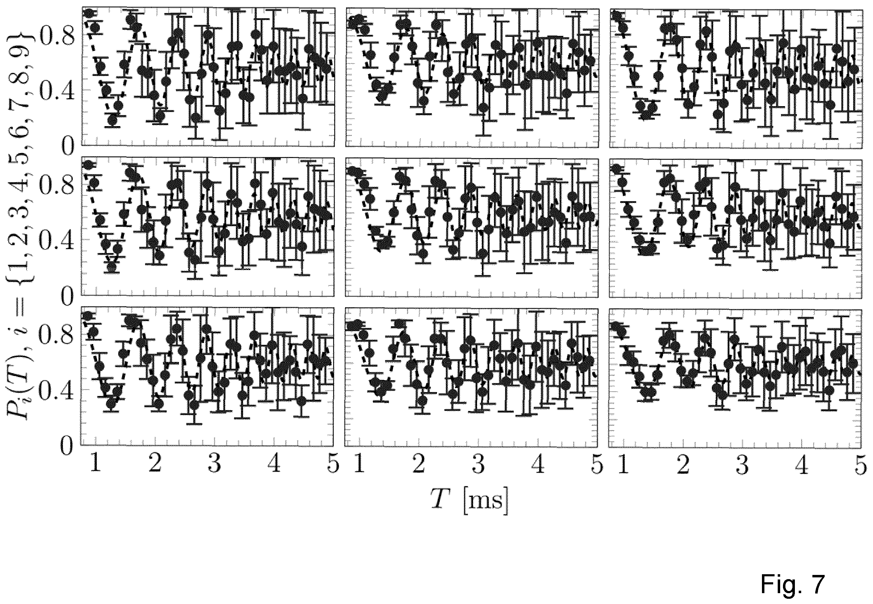

Die Figur 7 zeigt die Ausgangssignale der 9 simultanen Atominterferometer in Abhangigkeit von *T*. Dargestellt sind die Ausgangssignale der neun Atominterferometer, die mit den BECs der 2D-Anordnung realisiert wurden.Mit der Fitfunktion

$$P_i(T) = a_i + b_i \times \cos(a_{i,\text{eff}} k_{\text{eff}} T^2 + d) \times \exp(-Tf) \qquad (1)$$

lässt sich die effektiv wirkende Beschleunigung bestimmen. Der Offset $a_i$, Kontrast $b_i$, Frequenz $a_{i,eff}$, Offsetphase $d$ und Abnahme des Kontrast $f$ sind dabei Fitparameter, durch i ist das i-te Interferometer gekennzeichnet. Signifikant ist für Inertialsensorik dabei $a_{i,eff}$, das sich für die Interferometer 1 - 9 zu 0.0747 $\pm$ 0.0007, 0.0771 $\pm$ 0.00064, 0.0771 $\pm$ 0.0004, 0.0750 + 0.0006, 0.0775+ 0.0006, 0.0768 $\pm$ 0.0004, 0.0752 $\pm$ 0.0005, 0.0770 + 0.0005, 0.0765 $\pm$ 0.0005 in m/s$^2$ bestimmen lässt. Die Korrelation der Messdaten ist in Figur 8 dargestellt.

Die Figur 8 zeigt die Ausgangssignale der 9 simultanen Atominterferometer in parametrischer Darstellung. Um Korrelationen abzubilden ist hier jedes Interferometersignal gegen das mittlere Interferometer (5) aufgetragen

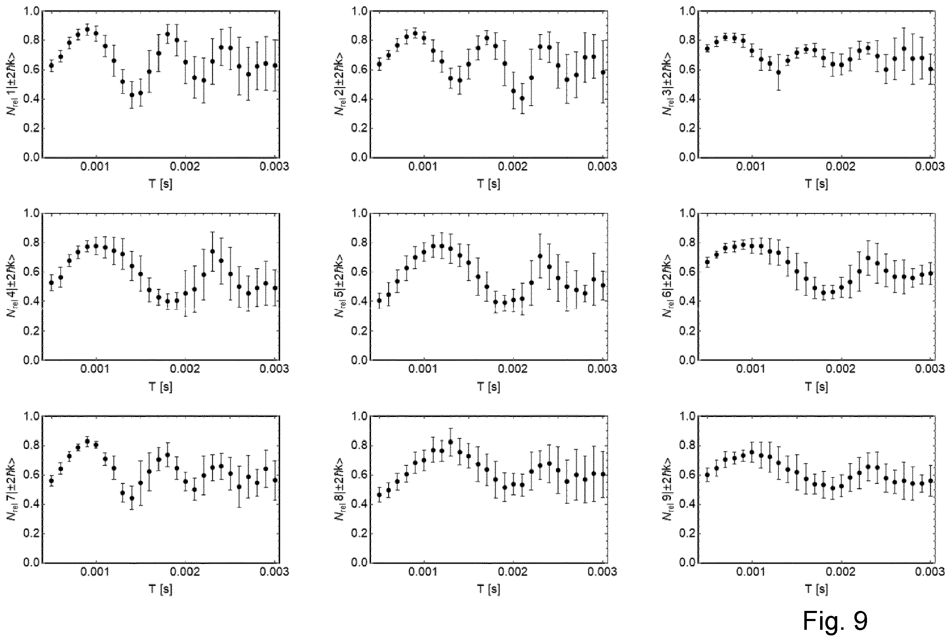

Die Figur 9 zeigt die Ausgangssignale der 9 simultanen Atominterferometer im 1D-Wellenleiter bzw. Ausgangssignale der neun Atominterferometer, wenn die Atome im 1D-Wellenleiter gehalten werden.

Phasensensitivität und Diskussion

Jedes BEC 5 dieser Anordnung kann durch Doppel-Bragg-Beugung für interferometrische Messungen nutzbar gemacht werden. Im in Figur 2 dargestellten Ausführungsbeispiel ergibt sich somit eine 3x3 Matrix von Interferometern I1, I2, I3, I4, I5, I6, I7, 18, I9. Die so erhaltenen korrelierten Messungen können differentiell ausgelesen werden, um Informationen über wirkende i) Beschleunigungen, ii) Gradienten, iii) Rotationen und iv) Rotationsbeschleunigungen zu erhalten.

Die Empfindlichkeit auf Beschleunigungen in x-Richtung entlang der Bragg-Strahlen ist intrinsisch in jedem der 9 Interferometer enthalten. Durch Korrelation benachbarter Interferometer in *x*-Richtung (Reihen) lassen sich Rückschlüsse auf Gradienten schließen, die jeweils mit ganzzahligen Vielfachen des Abstands $d_x$, skalieren. Rotationsraten und -beschleunigungen lassen sich zunächst durch eine Rotationsbewegung des Retroreflexspiegels des Bragg-Strahls positioniert im Abstand $x_M$ zu den Atomen mit Koordinaten $\vec{x}_M = (x_M, 0,0)$ beschreiben. Phase der einzelnen Ausgangssignale der Interferometer ist dabei gegeben durch:

$$\phi_i = 2k_{\text{eff}}T^2[a_{\text{eff}} + v_{yi}(2(\Omega_z + \Omega_M) + \dot{\Omega}_M T) + 2v_{zi}\Omega_y + y_i(\Omega_z\Omega_y + \dot{\Omega}_M)$$
$$-x_i(\Omega_y^2 + \Omega_z^2) + z_i\Omega_z\Omega_x + 2(x_i - x_M)\Omega_M^2] \qquad (2)$$

Wobei $\Omega_{x/y/z}$ eine Rotationsrate um die entsprechende Achse, (x/y/z)$_i$ die Position und $v_{(x/y/z)_i}$ die Geschwindigkeiten des einzelnen BECs vor der Applikation der Bragg-Strahlen, $x_M$ den Abstand zwischen dem Retroreflexspiegel und seinem Drehzentrum und $\Omega_M$, $\dot{\Omega}_M$ die Drehrate, bzw. dessen Drehratenbeschleunigung beschreibt. Differentielle Phasen zwischen den einzelnen Interferometern skalieren mit dem Abstand zwischen den BECs der Anordnung, für die größtmögliche differentielle Phase $\Delta\Phi_{ij} = \Phi_i - \Phi_j$ muss der Abstand $d_{x/y}$ zwischen den BECs der Anordnung maximiert werden. Durch die Implementation eines verstärkten Piezoaktuator, der den Spiegel verkippen kann, können die Drehrate des Spiegels eingestellt und Rotationen simuliert werden. Ebenso kann so kontrolliert eine Phasendifferenz erzeugt und schrittweise verändert werden.

Durch die begrenzte Interferometriedauer ist *T* in den ersten *proof-of-principle* Experimenten nur einige ms lang. Um Rotationsmessungen mit dem Spiegel zu demonstrieren, müssen die Drehraten, bzw -beschleunigung $\Omega_M$, $\dot{\Omega}_M$ >0.1

rad/s bzw. rad/s$^2$ überschreiten, was mit dem Piezoaktuator möglich ist. Eine Vergrößerung der Evolutionszeit kann mit geführter Interferometrie erreicht werden, dazu wird der Dipolfallenstrahl in y-Richtung ausgeschaltet. Resultierend sind die Atome in Interferometriestrahlrichtung nicht mehr gefangen und können in dem resultierenden 1D-Wellenleiter gehalten und mit den Interferometriestrahlen manipuliert werden. Erste Interferometrieergebnisse mit der Anordnung im Wellenleiter sind in 7 dargestellt, sind aber noch nicht komplett verstanden. Die $a_{eff}$ Skalenfaktoren aus der in Figur 7 dargestellten Messung werden Spaltenweise größer: Für die Interferometer 1, 4, 7 sind sie am Kleinsten und erhöhen sich spaltenweise sukzessiv für die Interferometer 2, 5, 8 und für 3, 6, 9. Eine Verkippung der Interferometriestrahlen sollte in gleichen Skalenfaktoren $a_{eff}$ resultieren. Um die festgestellte Abweichung zu verstehen werden in Kollaboration mit der Gruppe von Naceur Gaaloul 3D-Simulationen der Interferometersequenzen vorgenommen.

Durch Aufprägen einer Anfangsgeschwindigkeit orthogonal zu den Interferometriestrahlen kann der von $v_{yi}$ abhängige Term von Gleichung 2 vermessen werden. Anhand einer 2 x 3 Anordnung wurden halb-sigmoide Frequenzrampen, die als Eingangssignal des AOD in BP1 dienten, vermessen. Die BEC Anordnung wurde Spaltenweise mithilfe dieser Rampen beschleunigt und es ließen sich Geschwindigkeiten von 70 mm/s für BEC 3, 6 (rechte Spalte) und 35 mm/s für BEC 2, 5 (mittlere Spalte) für eine Rampe mit maximalem Frequenzhub 6 MHz (rechte Spalte) und Frequenzhub 3 MHz (mittlere Spalte) und Rampendauer 65 ms feststellen, die linke Spalte wurde Ortsfest gehalten.

Referenzen

[1] J. M. McGuirk et al. "Sensitive absolute-gravity gradiometry using atom interferometry". In: Physical Review A 65.3 (Feb. 2002). Publisher: American Physical Society (APS). DOI: 10.1103/physreva.65.033608.
[2] G. Rosi et al. "Measurement of the Gravity-Field Curvature by Atom Interferometry". In: Physical Review Letters 114.1 (Jan. 2015). Publisher: American Physical Society, p. 013001. DOI: 10.1103/PhysRevLett.114.013001. URL: https://link.aps.org/doi/10.1103/PhysRevLett.114.013001 (visited on 01/02/2023).
[3] Romain Gautier et al. "Accurate measurement of the Sagnac effect for matter waves". en. In: Science Advances 8.23 (Dune 2022), eabn8009. ISSN: 2375-2548. DOI: 1 0.1126/sciadv.abn8009. https://www.science.org/doi/10.1126/sci-adv.abn8009 (visited on 01/02/2023).
[4] P. Berg et al. "Composite-Light-Pulse Technique for High-Precision Atom Inter-ferometry". In: Phys. Rev. Lett. 114.6 (Feb. 2015). Publisher: American Physical Society, p. 063002. DOI: 10.1103/PhysRevLett.114.063002.
[5] J. K. Stockton, K. Takase, and M. A. Kasevich. "Absolute Geodetic Rotation Measurement Using Atom Interferometry". In: Physical Review Letters 107.13 (Sept. 2011). Publisher: American Physical Society, p. 133001. DOI: 10.1103/PhysRevLett.107.133001. URL: https://link.aps.org/doi/10.1103/PhysRevLett.107.133001 (visited on 01/05/2023).
[6] B. Barrett et al. "Multidimensional Atom Optics and Interferometry". In: Phys. Rev. Lett. 122.4 (Feb. 2019). Publisher: American Physical Society, p. 043604. DOI: 10.1103/PhysRevLett.122.043604. URL: https://link.aps.org/doi/10.1103/PhysRev-Lett.122.043604.
[7] Matthias Gersemann et al. "Differential interferometry using a Bose-Einstein condensate". In: The European Physical Journal D 74.10 (2020), p. 203. ISSN: 1434-6079. DOI: 10.1140/epjd/e2020-10417-8. URL: https://doi.org/10.1140/epjd/e2020-10417-8.
[8] Susannah M. Dickerson et al. "Multiaxis Inertial Sensing with Long-Time Point Source Atom Interferometry". In: Physical Review Letters 111.8 (Aug. 2013). Publisher: American Physical Society, p. 083001. DOI: 10 1103/Phys-RevLett 111. 083001. URL: https://link.aps.org/doi/10.1103/PhysRevLett.111.083001 (visited on 01/03/2023).
[9] A. Wanner et al. "Seismic attenuation system for the AEI 10 meter Prototype". en. In: Classical and Quantum Gravity 29.24 (Nov. 2012). Publisher: IOP Publishing, p. 245007. ISSN: 0264-9381. DOI: 10.1088/0264-9381/29/24/245007. URL: https://dx doi.org/10.1088/0264-9381/29/24/245007 (visited on 07/05/2023).
[10] Nathan Shettel and Rainer Dumke. Emulating an Atomic Gyroscope with Multiple Accelerometers. arXiv:2301.11155 [physics]. Jan. 2023. DOI: 10.48550/arXiv.2301.11155. URL: http://arxiv.org/abs/2301.11155 (visited on 01/31/2023).

**Patentansprüche**

1.    Quanteninertialmesseinheit zur Erfassung wenigstens einer physikalischen Messgröße basierend auf atominterferometrischer Beschleunigungsmessung, aufweisend:

a) wenigstens eine Atomfalle (1, 3, 11, 12, 13, 16), die dazu eingerichtet ist, eine Atomwolke zu fangen,

b) wenigstens eine steuerbare Aufteilungsvorrichtung (2), die dazu eingerichtet ist, abhängig von wenigstens einem Steuersignal in der in der Atomfalle (1, 3, 11, 12, 13, 16) gefangenen Atomwolke mehrere räumlich voneinander separierte makroskopische Teilatomwolken (5) mittels kalter oder ultrakalter Quantengase, wie beispielsweise Bose-Einstein-Kondensate, in einer definierten geometrischen Anordnung zu erzeugen,

c) wenigstens eine Atomoptiklichtfeldvorrichtung (4, 6, 7, 8, 9, 10), die dazu eingerichtet ist, mittels der erzeugten makroskopischen Teilatomwolken (5) jeweils eine atominterferometrische eindimensionale Beschleunigungsmessung auszuführen, wobei für jede makroskopische Teilatomwolke (5) ein Beschleunigungswert bestimmt wird,

d) wenigstens eine Auswertevorrichtung (17), die dazu eingerichtet ist, aus den mittels der wenigstens einen Atomoptiklichtfeldvorrichtung (4, 6, 7, 8, 9, 10) gewonnenen mehreren eindimensionalen Beschleunigungswerten eine andere physikalische Messgröße zu bestimmen als die gemessenen eindimensionalen Beschleunigungswerte.

2. Quanteninertialmesseinheit nach Anspruch 1, **dadurch gekennzeichnet, dass** die steuerbare Aufteilungsvorrichtung (2) dazu eingerichtet ist, die makroskopischen Teilatomwolken (5) in einer definierten geometrischen Anordnung in Form einer regelmäßigen oder unregelmäßigen zwei- oder dreidimensionalen Matrixanordnung zu erzeugen.

3. Quanteninertialmesseinheit nach Anspruch 2, **dadurch gekennzeichnet, dass** die Matrixanordnung wenigstens zwei, wenigstens vier, wenigstens sechs oder wenigstens neun Matrixelemente jeweils in Form der makroskopischen Teilatomwolke (5) hat.

4. Quanteninertialmesseinheit nach einem der vorhergehenden Ansprüche, **dadurch gekennzeichnet, dass** die definierte geometrische Anordnung der makroskopischen Teilatomwolken (5) in einer Ebene eine Fläche von wenigstens 0,5 mm$^2$ oder wenigstens 1 mm$^2$ umfasst.

5. Quanteninertialmesseinheit nach einem der vorhergehenden Ansprüche, **dadurch gekennzeichnet, dass** die Auswerteeinrichtung (17) dazu eingerichtet ist, als physikalische Messgröße eine oder mehrere Drehraten, eine oder mehrere Drehbeschleunigungen, einen oder mehrere Beschleunigungsgradienten, einen oder mehrere Magnetfeldkomponenten und/oder wenigstens eine sonstige inertiale Messgröße zu bestimmen.

6. Quanteninertialmesseinheit nach einem der vorhergehenden Ansprüche, **dadurch gekennzeichnet, dass** die Quanteninertialmesseinheit wenigstens einen Wellenleiter aufweist, wobei die Atomfalle (1, 3, 11, 12, 13, 16) dazu eingerichtet ist, in dem Wellenleiter die Atomwolke zu fangen.

7. Quanteninertialmesseinheit nach einem der vorhergehenden Ansprüche, **dadurch gekennzeichnet, dass** die Atomoptiklichtfeldvorrichtung (4, 6, 7, 8, 9, 10) dazu eingerichtet ist, interferometrische Messungen an den makroskopischen Teilatomwolken (5) mittels kohärenter Ein- oder Mehrphotonenprozesse auszuführen.

8. Quanteninertialmesseinheit nach einem der vorhergehenden Ansprüche, **dadurch gekennzeichnet, dass** die Atomfalle (1, 3, 11, 12, 13, 16) als magneto-optische Atomfalle ausgebildet ist.

9. Quanteninertialmesseinheit nach einem der vorhergehenden Ansprüche, **dadurch gekennzeichnet, dass** die Quanteninertialmesseinheit eine Kühlvorrichtung (13) zum Abkühlen der Atomwolke hat, die eine evaporative Kühlanordnung aufweist.

10. Quanteninertialmesseinheit nach einem der vorhergehenden Ansprüche, **dadurch gekennzeichnet, dass** die steuerbare Aufteilungsvorrichtung (2) wenigstens eine optische Dipolfalle und/oder wenigstens eine Magnetfalle aufweist.

11. Quanteninertialmesseinheit nach Anspruch 10, **dadurch gekennzeichnet, dass** die wenigstens eine optische Dipolfalle wenigstens zwei Strahlengänge hat, insbesondere wenigstens zwei sich kreuzende Strahlengänge oder wenigstens zwei parallele Strahlengänge.

12. Quanteninertialmesseinheit nach einem der vorhergehenden Ansprüche, **dadurch gekennzeichnet, dass** die steuerbare Aufteilungsvorrichtung (2) wenigstens eine steuerbare optische Aufteilungseinheit, insbesondere einen Deflektor, aufweist, durch die wenigstens ein Strahlengang der optischen Dipolfalle in mehrere Teilstrahlengänge aufteilbar sind.

13. Verfahren zur Erfassung wenigstens einer physikalischen Messgröße basierend auf atominterferometrischer Beschleunigungsmessung mittels einer Quanteninertialmesseinheit, insbesondere einer Quanteninertialmesseinheit nach einem der vorhergehenden Ansprüche, mit folgenden Merkmalen:

a) mittels einer Atomfalle (1, 3, 11, 12, 13, 16) wird eine Atomwolke gefangen,

b) mittels einer steuerbaren Aufteilungsvorrichtung (2) werden abhängig von wenigstens einem Steuersignal in der in der Atomfalle gefangenen Atomwolke mehrere räumlich voneinander separierte makroskopische Teilatomwolken (5) mittels kalter oder ultrakalter Quantengase, wie beispielsweise Bose-Einstein-Kondensate, in einer definierten geometrischen Anordnung erzeugt,

c) mittels einer Atomoptiklichtfeldvorrichtung (4, 6, 7, 8, 9, 10) wird mittels der erzeugten makroskopischen Teilatomwolken (5) jeweils eine atominterferometrische eindimensionale Beschleunigungsmessung ausgeführt, wobei für jede makroskopische Teilatomwolke (5) ein Beschleunigungswert bestimmt wird,

d) mittels wenigstens einer Auswertevorrichtung (17) wird aus den mittels der wenigstens einen Atomoptiklichtfeldvorrichtung (4, 6, 7, 8, 9, 10) gewonnenen mehreren eindimensionalen Beschleunigungswerten eine andere physikalische Messgröße bestimmt als die gemessenen eindimensionalen Beschleunigungswerte.

14. Verfahren nach Anspruch 13, **dadurch gekennzeichnet, dass** als physikalische Messgröße eine oder mehrere Drehraten, eine oder mehrere Drehbeschleunigungen, einen oder mehrere Beschleunigungsgradienten, einen oder mehrere Magnetfeldkomponenten und/oder wenigstens eine sonstige inertiale Messgröße bestimmt wird.

**Claims**

1. Quantum inertial measurement unit for detecting at least one physical measurement quantity based on atom-interferometric acceleration measurement, comprising:

a) at least one atom trap (1, 3, 11, 12, 13, 16) configured to capture an atomic cloud,

b) at least one controllable splitting device (2) configured, depending on at least one control signal, to generate within the atomic cloud trapped in the atom trap (1, 3, 11, 12, 13, 16) a plurality of spatially separated macroscopic partial atomic clouds (5) composed of cold or ultracold quantum gases, such as Bose-Einstein condensates, in a defined geometric arrangement,

c) at least one atom-optical light-field device (4, 6, 7, 8, 9, 10) configured to perform, by means of the generated macroscopic partial atomic clouds (5), an atom-interferometric one-dimensional acceleration measurement for each of the macroscopic partial atomic clouds (5), wherein an acceleration value is determined for each macroscopic partial atomic cloud (5),

d) at least one evaluation device (17) configured to determine, from the plurality of one-dimensional acceleration values obtained by means of the at least one atom-optical light-field device (4, 6, 7, 8, 9, 10), a physical measurement quantity other than the measured one-dimensional acceleration values.

2. Quantum inertial measurement unit according to claim 1, **characterized in that** the controllable splitting device (2) is configured to generate the macroscopic partial atomic clouds (5) in a defined geometric arrangement in the form of a regular or irregular two- or three-dimensional matrix arrangement.

3. Quantum inertial measurement unit according to claim 2, **characterized in that** the matrix arrangement comprises at least two, at least four, at least six, or at least nine matrix elements, each in the form of a macroscopic partial atomic cloud (5).

4. Quantum inertial measurement unit according to any one of the preceding claims, **characterized in that** the defined geometric arrangement of the macroscopic partial atomic clouds (5) in a plane covers an area of at least 0.5 mm$^2$ or at least 1 mm$^2$.

5. Quantum inertial measurement unit according to any one of the preceding claims, **characterized in that** the evaluation device (17) is configured to determine, as the physical measurement quantity, one or more rotation rates, one or more angular accelerations, one or more acceleration gradients, one or more magnetic field components, and/or at least one other inertial measurement quantity.

6. Quantum inertial measurement unit according to any one of the preceding claims, **characterized in that** the quantum inertial measurement unit comprises at least one waveguide, the atom trap (1, 3, 11, 12, 13, 16) being configured to capture the atomic cloud within the waveguide.

7. Quantum inertial measurement unit according to any one of the preceding claims, **characterized in that** the atom-optical light-field device (4, 6, 7, 8, 9, 10) is configured to perform interferometric measurements on the macroscopic partial atomic clouds (5) by means of coherent single- or multi-photon processes.

8. Quantum inertial measurement unit according to any one of the preceding claims, **characterized in that** the atom trap (1, 3, 11, 12, 13, 16) is designed as a magneto-optical atom trap.

9. Quantum inertial measurement unit according to any one of the preceding claims, **characterized in that** the quantum inertial measurement unit comprises a cooling device (13) for cooling the atomic cloud, said cooling device comprising an evaporative cooling arrangement.

10. Quantum inertial measurement unit according to any one of the preceding claims, **characterized in that** the controllable splitting device (2) comprises at least one optical dipole trap and/or at least one magnetic trap.

11. Quantum inertial measurement unit according to claim 10, **characterized in that** the at least one optical dipole trap comprises at least two beam paths, in particular at least two intersecting beam paths or at least two parallel beam paths.

12. Quantum inertial measurement unit according to any one of the preceding claims, **characterized in that** the controllable splitting device (2) comprises at least one controllable optical splitting unit, in particular a deflector, by means of which at least one beam path of the optical dipole trap can be split into a plurality of partial beam paths.

13. Method for detecting at least one physical measurement quantity based on atom-interferometric acceleration measurement using a quantum inertial measurement unit, in particular a quantum inertial measurement unit according to any one of the preceding claims, comprising the following steps:

a) capturing an atomic cloud by means of an atom trap (1, 3, 11, 12, 13, 16),
b) generating, depending on at least one control signal, within the atomic cloud trapped in the atom trap, a plurality of spatially separated macroscopic partial atomic clouds (5) composed of cold or ultracold quantum gases, such as Bose-Einstein condensates, in a defined geometric arrangement by means of a controllable splitting device (2),
c) performing, by means of an atom-optical light-field device (4, 6, 7, 8, 9, 10), for each of the generated macroscopic partial atomic clouds (5), an atom-interferometric one-dimensional acceleration measurement, wherein an acceleration value is determined for each macroscopic partial atomic cloud (5),
d) determining, by means of at least one evaluation device (17), from the plurality of one-dimensional acceleration values obtained by the at least one atom-optical light-field device (4, 6, 7, 8, 9, 10), a physical measurement quantity other than the measured one-dimensional acceleration values.

14. Method according to claim 13, **characterized in that** one or more rotation rates, one or more angular accelerations, one or more acceleration gradients, one or more magnetic field components, and/or at least one other inertial measurement quantity is determined as the physical measurement quantity.

**Revendications**

1. Unité de mesure inertielle quantique pour détecter au moins une grandeur de mesure physique sur la base d'une mesure d'accélération par interférométrie atomique, comprenant :

a) au moins un piège à atomes (1, 3, 11, 12, 13, 16) conçu pour piéger un nuage atomique,
b) au moins un dispositif de séparation commandable (2) conçu pour générer à partir du nuage atomique piégé dans le piège à atomes (1, 3, 11, 12, 13, 16), en fonction d'au moins un signal de commande, plusieurs nuages atomiques macroscopiques (5) partiels, séparés les uns des autres dans l'espace, au moyen de gaz quantiques froids ou ultra-froids, tels que par exemple des condensats de Bose-Einstein, selon une disposition géométrique définie,
c) au moins un dispositif à champ lumineux optique atomique (4, 6, 7, 8, 9, 10) conçu pour effectuer une mesure d'accélération unidimensionnelle par interférométrie atomique à l'aide des nuages atomiques macroscopiques (5) partiels générés, une valeur d'accélération étant déterminée pour chaque nuage atomique macroscopique (5) partiel,

d) au moins un dispositif d'évaluation (17) conçu pour déterminer, à partir des multiples valeurs d'accélération unidimensionnelles obtenues au moyen dudit au moins un dispositif à champ lumineux optique atomique (4, 6, 7, 8, 9, 10), une grandeur de mesure physique autre que les valeurs d'accélération unidimensionnelles mesurées.

2.  Unité de mesure inertielle quantique selon la revendication 1,
    **caractérisée en ce que** le dispositif de séparation commandable (2) est conçu pour générer les nuages atomiques macroscopiques (5) partiels selon une disposition géométrique définie sous la forme d'une disposition matricielle régulière ou irrégulière à deux ou trois dimensions.

3.  Unité de mesure inertielle quantique selon la revendication 2,
    **caractérisée en ce que** la disposition matricielle présente au moins deux, au moins quatre, au moins six ou au moins neuf éléments de matrice, chacun sous la forme dudit nuage atomique macroscopique (5) partiel.

4.  Unité de mesure inertielle quantique selon l'une des revendications précédentes,
    **caractérisée en ce que** la disposition géométrique définie des nuages atomiques macroscopiques (5) partiels dans un plan occupe une surface d'au moins 0,5 mm$^2$ ou d'au moins 1 mm$^2$.

5.  Unité de mesure inertielle quantique selon l'une des revendications précédentes,
    **caractérisée en ce que** le dispositif d'évaluation (17) est conçu pour déterminer comme grandeur de mesure physique une ou plusieurs vitesses de rotation, une ou plusieurs accélérations de rotation, un ou plusieurs gradients d'accélération, une ou plusieurs composantes de champ magnétique et/ou au moins une autre grandeur de mesure inertielle.

6.  Unité de mesure inertielle quantique selon l'une des revendications précédentes,
    **caractérisée en ce que** l'unité de mesure inertielle quantique comporte au moins un guide d'ondes, le piège à atomes (1, 3, 11, 12, 13, 16) étant conçu pour piéger le nuage atomique dans le guide d'ondes.

7.  Unité de mesure inertielle quantique selon l'une des revendications précédentes,
    **caractérisée en ce que** le dispositif à champ lumineux optique atomique (4, 6, 7, 8, 9, 10) est conçu pour effectuer des mesures interférométriques sur les nuages atomiques macroscopiques (5) partiels au moyen de processus cohérents à photon unique ou à photons multiples.

8.  Unité de mesure inertielle quantique selon l'une des revendications précédentes,
    **caractérisée en ce que** le piège à atomes (1, 3, 11, 12, 13, 16) est conçu comme un piège à atomes magnéto-optique.

9.  Unité de mesure inertielle quantique selon l'une des revendications précédentes,
    **caractérisée en ce que** l'unité de mesure inertielle quantique comporte un dispositif de refroidissement (13) destiné à refroidir le nuage atomique, qui comprend un moyen de refroidissement par évaporation.

10. Unité de mesure inertielle quantique selon l'une des revendications précédentes,
    **caractérisée en ce que** le dispositif de séparation commandable (2) comprend au moins un piège dipolaire optique et/ou au moins un piège magnétique.

11. Unité de mesure inertielle quantique selon la revendication 10,
    **caractérisée en ce que** ledit au moins un piège dipolaire optique comprend au moins deux chemins optiques, en particulier au moins deux chemins optiques qui se croisent ou au moins deux chemins optiques parallèles.

12. Unité de mesure inertielle quantique selon l'une des revendications précédentes,
    **caractérisée en ce que** le dispositif de séparation commandable (2) comporte au moins une unité de séparation optique commandable, en particulier un déflecteur, permettant de séparer au moins un chemin optique du piège dipolaire optique en plusieurs chemins optiques partiels.

13. Procédé de détection d'au moins une grandeur de mesure physique sur la base d'une mesure d'accélération par interférométrie atomique à l'aide d'une unité de mesure inertielle quantique, en particulier une unité de mesure inertielle quantique selon l'une des revendications précédentes, présentant les éléments suivants :

a) un nuage atomique est piégé au moyen d'un piège à atomes (1, 3, 11, 12, 13, 16),

b) au moyen d'un dispositif de séparation commandable (2), en fonction d'au moins un signal de commande, plusieurs nuages atomiques macroscopiques (5) partiels séparés les uns des autres dans l'espace sont générés dans le nuage atomique piégé dans le piège à atomes au moyen de gaz quantiques froids ou ultra-froids, tels que par exemple des condensats de Bose-Einstein, selon une disposition géométrique définie,

c) au moyen d'un dispositif à champ lumineux optique atomique (4, 6, 7, 8, 9, 10), une mesure d'accélération unidimensionnelle par interférométrie atomique est effectuée à l'aide des nuages atomiques macroscopiques (5) partiels générés, une valeur d'accélération étant déterminée pour chaque nuage atomique macroscopique (5) partiel,

d) au moyen d'au moins un dispositif d'évaluation (17), une grandeur de mesure physique autre que les valeurs d'accélération unidimensionnelles mesurées est déterminée à partir des multiples valeurs d'accélération unidimensionnelles obtenues au moyen dudit au moins un dispositif à champ lumineux optique atomique (4, 6, 7, 8, 9, 10).

14. Procédé selon la revendication 13,
**caractérisé en ce qu'**une ou plusieurs vitesses de rotation, une ou plusieurs accélérations de rotation, un ou plusieurs gradients d'accélération, une ou plusieurs composantes de champ magnétique et/ou au moins une autre grandeur de mesure inertielle sont déterminées comme grandeur de mesure physique.

Fig. 1

Fig. 2

EP 4 575 517 B1

Fig. 3

Fig. 4

EP 4 575 517 B1

Fig. 5

Fig. 6

Fig. 7

Fig. 8

EP 4 575 517 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Differential interferometry using a Bose-Einstein condensate. **GERSEMANN et al.** THE EUROPEAN PHYSICAL JOURNAL D. SPRINGER BERLIN HEI-DELBERG, 01 October 2020, vol. 74
- Sensitive absolute-gravity gradiometry using atom interferometry. **J. M. MCGUIRK et al.** Physical Review A. American Physical Society (APS)., February 2002, vol. 65
- Measurement of the Gravity-Field Curvature by Atom Interferometry. **G. ROSI et al.** Physical Review Letters. American Physical Society, January 2015, vol. 114.1, 013001
- **ROMAIN GAUTIER et al.** Accurate measurement of the Sagnac effect for matter waves. *Science Advances*, 2022, vol. 8.23, ISSN 2375-2548, 8009, https://www.science.org/doi/10.1126/sci-adv.abn8009
- Composite-Light-Pulse Technique for High-Precision Atom Inter-ferometry. **P. BERG et al.** Phys. Rev. Lett.. American Physical Society, February 2015, vol. 114.6, 063002
- Absolute Geodetic Rotation Measurement Using Atom Interferometry. **J. K. STOCKTON** ; **K. TA-KASE** ; **M. A. KASEVICH.** Physical Review Letters. American Physical Society, September 2011, vol. 107.13, 133001

- Multidimensional Atom Optics and Interferometry. **B. BARRETT et al.** Phys. Rev. Lett.. American Physical Society, February 2019, vol. 122.4, 043604
- **MATTHIAS GERSEMANN et al.** Differential inter-ferometry using a Bose-Einstein condensate. *The European Physical Journal D*, 2020, vol. 74.10, ISSN 1434-6079, 203, https: //doi.org/10.1140/epj-d/e2020-10417-8.
- Multiaxis Inertial Sensing with Long-Time Point Source Atom Interferometry. **SUSANNAH M. DI-CKERSON et al.** Physical Review Letters. American Physical Society, August 2013, vol. 111.8, 083001
- Seismic attenuation system for the AEI 10 meter Prototype. **A. WANNER et al.** Classical and Quantum Gravity. IOP Publishing, November 2012, vol. 29.24, 245007
- **NATHAN SHETTEL** ; **RAINER DUMKE.** Emulating an Atomic Gyroscope with Multiple Accelerometers.. *arXiv:2301.11155*, 31 January 2023, http: //arxiv.org/abs/2301.11155